# EUROPÄISCHE PATENTSCHRIFT

(11) **EP 2 057 889 B1**
(45) Veröffentlichungstag und Bekanntmachung des Hinweises auf die Patenterteilung: **08.06.2011**
(21) Anmeldenummer: 08017126.7
(22) Anmeldetag: 29.09.2008
(51) Int. Cl.: A01D 78/10

(54) **Heuwerbungsmaschine**
Hay rake
Râteau à foin

(30) Priorität: 09.11.2007 DE 102007053566
(43) Veröffentlichungstag der Anmeldung: 13.05.2009
(73) Patentinhaber: Alois Pöttinger Maschinenfabrik Ges. m.b.H., 4710 Grieskirchen (AT)
(72) Erfinder: Mairhuber, Josef, 4722 Peuerbach (AT)
(74) Vertreter: Thoma, Michael

(56) Entgegenhaltungen:
- EP-A- 0 381 970
- EP-A- 0 465 393
- DE-C1- 19 716 379
- DE-U1- 9 312 222
- DE-U1-202005 017 382

## Beschreibung

Die vorliegende Erfindung betrifft eine Heuwerbungsmaschine, insbesondere einen Kreiselheuer, mit zumindest einem Rechkreisel, der über einen Kreiseltragarm an einem Maschinenrahmen um eine liegende Schwenkachse schwenkbar angelenkt und mittels eines Schwenkantriebs aus einer abgesenkten Arbeitsstellung in eine nach oben geschwenkte Transport- und/oder Vorgewendestellung aushebbar ist, wobei der genannte Kreiseltragarm längenveränderbar, insbesondere teleskopierbar, ausgebildet ist.

Um Kreiselschwader mit mehreren Rechkreiseln straßentransportierbar zu machen, ist es bekannt, die Rechkreisel zum Zwecke des Straßentransports nach oben zu schwenken. Da größere Kreiselschwader in der abgesenkten Arbeitsstellung eine große Ausladung benötigen, um eine große Arbeitsbreite zu überdecken, führt dies beim Nach-oben-schwenken der Rechkreisel in die Transportstellung zu einem sehr hoch aufbauenden Gerät mit einem sehr hohen Schwerpunkt, was der Fahrstabilität abträglich wäre. Die EP 0381970 B1 schlägt deshalb vor, die Kreiseltragarme teleskopierbar auszubilden, so dass durch Zusammenschieben des Kreiseltragarmes dessen Länge verkürzt und der Rechkreisel sozusagen näher an den Maschinenrahmen geholt werden kann. Hierbei ist gemäß EP 0381970 B1 ein Zwangsmechanismus vorgesehen, der den teleskopierbaren Kreiseltragarm zwangsweise zusammenschiebt, wenn dieser nach oben geschwenkt wird. Konkret ist hierbei eine Lenkerstange vorgesehen, die einerseits von der Kreiseltragarmschwenkachse beabstandet am Maschinenrahmen angelenkt ist und andererseits an dem äußeren Kreiseltragarmteil angelenkt ist, wobei die Geometrie derart gewählt ist, dass die genannte Lenkerstange durch ihren Versatz gegenüber der Kreiseltragarmschwenkachse den Kreiseltragarm beim Nach-oben-schwenken zusammenschiebt und beim Nach-unten-schwenken auseinanderfährt. Zum Anheben des Kreiseltragarms ist dabei ein Hydraulikzylinder vorgesehen, der einerseits am Maschinenrahmen und andererseits am Kreiseltragarm angelenkt ist. Dieser Zwangsmechanismus zum Ein- und Ausfahren des teleskopierbaren Kreiseltragarms ist jedoch in mehrfacher Hinsicht nachteilig. Insbesondere behindert er die Einstellung der Schwadbreite des Kreiselschwaders. Zum anderen kann in angehobenen Tragarmstellungen nicht die volle Länge des Kreiseltragarms genutzt werden.

Ein ähnlicher Schwader ist aus der EP 0 465 393 A1 bekannt, bei dem die nach oben schwenkbaren Kreiseltragarme ebenfalls teleskopierbar ausgebildet sind. Das Ein- und Ausfahren der teleskopierbaren Kreiseltragarme wird hier ebenfalls über einen Hebelmechanismus zwangsgesteuert, der die Tragarmlänge in Abhängigkeit der Schwenkstellung fest vorgibt. Ein Schwenkhebel des genannten Hebelmechanismus kann hierbei durch Umstecken an verschiedenen Anlenkpunkten befestigt werden, wodurch verschiedene Längen des Kreiseltragarms einstellbar sind, was jedoch nichts daran ändert, dass bei einmal gewählter Lochposition beim Nach-oben- bzw. Nach-unten-schwenken die Länge des Kreiseltragarms zwangsweise verändert und fest vorgegeben wird.

Dagegen ist in der DE202005017382 U1 ein unabhängig von der Schwenkstellung des Kreiseltragarms und unabhängig vom Schwenkantrieb betätigbarer Längenverstellantrieb zur Längenverstellung des Kreiseltragarms unabhängig von dessen Schwenkstellung vorgesehen. Hierdurch kann in der abgesenkten Arbeitsstellung der Kreiseltragarm in verschiedenen Längen gefahren werden und die von dem Rechkreisel erzeugte Schwadbreite variabel eingestellt werden. Die von der Schwenkstellung des Zinkentragarms unabhängig einstellbare effektive Kreiseltragarmlänge kann ggf. auch dazu genutzt werden, bei einem Betrieb an Hangkanten, bei dem sich zum Zwecke der Bodenanpassung der Kreiseltragarm mit dem daran befestigten Rechkreisel leicht nach oben schwenkt, die volle Länge des Kreiseltragarms zu nutzen, da kein zwangsweises Einfahren beim Nach-oben-schwenken erfolgt. Auch im Montage- und Wartungsbetrieb kann die Entkoppelung von Aushubbewegung und Längenverstellung des Kreiseltragarms Vorteile mit sich bringen, beispielsweise wenn in der hochgeklappten Transportstellung für die Montage ein Teil besser zugänglich ist, wenn der Kreiseltragarm nicht vollständig eingefahren ist. Dennoch bleibt der Verstellbereich begrenzt.

Hier versucht die vorliegende Erfindung Abhilfe zu schaffen. Ihr liegt die Aufgabe zugrunde, eine verbesserte Landmaschine der genannten Art zu schaffen, die Nachteile des Standes der Technik vermeidet und Letzteren in vorteilhafter Weise weiterbildet. Insbesondere soll eine verbesserte Anpassbarkeit der Rechkreiselführung an verschiedene Betriebsbedingungen sowie eine höhere Variabilität des Geräts unter verschiedenen Einsatzbedingungen erreicht werden.

Erfindungsgemäß wird diese Aufgabe durch eine Landmaschine gemäß Anspruch 1 gelöst. Bevorzugte Ausgestaltungen der Erfindung sind Gegenstand der abhängigen Ansprüche.

Im Rahmen der Erfindung ist dem Längenverstellantrieb eine Einstellvorrichtung zugeordnet, mittels derer der durch den Längenverstellantrieb bewirkte Verstellbereich der Kreiseltragarmlänge verstellt werden kann. Ein solcher variabler Verstellbereich des Längenverstellantriebes wird erfindungsgemäß dadurch erreicht werden, dass der Längenverstellantrieb an einem beweglich ausgebildeten und/oder verstellbaren Anlenkpunkt angelenkt ist.

Dabei ist dem Anlenkpunkt ein Verstellmechanismus zugeordnet, der die Position des Anlenkpunktes in Abhängigkeit der Schwenkstellung des Kreiseltragarmes verstellt. Die Variabilität der Landmaschine und ihre Anpassbarkeit an verschiedene Betriebsbedingungen wird beträchtlich erhöht.

Der Längenverstellantrieb kann hierbei grundsätzlich verschieden ausgebildet sein. Gemäß einer vorteilhaften Ausführung der Erfindung kann der Längenverstellantrieb einen Druckmittelzylinder umfassen, der einerseits an einem Kreiseltragarmteil trieb einen Druckmittelzylinder umfassen, der einerseits an einem Kreiseltragarmteil oder einem damit verbundenen Anlenkstück und andererseits mit einem anderen Kreiseltragarmteil, einem Maschinenrahmenteil oder einem mit einem dieser beiden Teile verbundenen Anlenkstück angelenkt ist. Ein solcher Druckmittelzylinder als Längenverstellantrieb für den Kreiseltragarm bringt bei kompakter Bauweise einen großen Verstellbereich mit sich. Der Druckmittelzylinder ist hierbei vorteilhafterweise doppelt wirkend ausgebildet, so dass der Kreiseltragarm sowohl aktiv ausgefahren als auch aktiv eingefahren werden kann. Ggf. könnte auch nur ein einfach wirkender Druckmittelzylinder vorgesehen sein, der dann vorteilhafterweise mit einer Vorspannvorrichtung, beispielsweise in Form einer Federeinrichtung zusammenwirken kann dergestalt, dass der Kreiseltragarm in seine eingefahrene Stellung vorgespannt ist und durch den Druckmittelzylinder ausgefahren werden kann. Bevorzugt ist jedoch eine doppelt wirkende Ausbildung des Druckmittelzylinders, die ein aktives Einstellen der gewünschten Länge des Kreiseltragarms auch bei größeren Hemmkräften oder Betriebskräften sicherstellt.

In bevorzugter Weiterbildung der Erfindung ist der Längenverstellantrieb vorzugsweise über eine Lenkeranordnung mit einem von der Schwenkachse des Kreiseltragarms beabstandeten Punkt am Maschinenrahmen verbunden. Insbesondere kann der Druckmittelzylinder des Längenverstellantriebs an einem Umlenkhebel angelenkt sein, der schwenkbar an einem der Kreiseltragarmteile gelagert und über einen Lenker mit dem von der Kreiseltragarmschwenkachse beabstandeten Punkt am Maschinenrahmen verbunden ist. Hierdurch kann insbesondere erreicht werden, dass der Druckmittelzylinder in angehobenen Stellungen des Rechkreisel diesen in einem weiter innen liegenden Bereich hinsichtlich seines Abstandes vom Maschinenrahmen verstellen kann, während in der abgesenkten Arbeitsstellung der Druckmittelzylinder den Rechkreisel in einem weiter ausgefahrenen Verstellbereich ein- und ausfahren kann. Nichtsdestotrotz bleibt die Längenverstellbarkeit des Kreiseltragarmes unabhängig von dessen Schwenkstellung im Gegensatz zu einer Zwangssteuerung, wie sie aus dem Stand der Technik bekannt ist, erhalten.

Die Verstellung des Längenverstellbereiches kann im Verhältnis zur Größe des genannten Verstellbereiches unterschiedlich bemessen werden. Gemäß einer vorteilhaften Ausführung der Erfindung ist der von dem Druckmittelzylinder zur Verfügung gestellte Verstellbereich deutlich größer als seine Verstellung durch die Verschiebung des Anlenkpunktes. In Weiterbildung der Erfindung kann der zuvor genannte Umlenkhebel und/oder die Anlenkung des damit verbundenen Lenkers derart ausgebildet sein, dass sie beim Nach-oben-schwenken bzw. Nach-unten-schwenken des Kreiseltragarmes eintretende Verstellung des Anlenkpunktes des Druckmittelzylinders am Umlenkhebels kleiner ist als der maximale Verstellweg des Druckmittelzylinders.

Der Kreiseltragarm kann grundsätzlich verschieden ausgebildet sein, wobei vorteilhafterweise eine Teleskopierbarkeit mit ineinander schiebbaren Kreiseltragarmteilen vorgesehen ist. Die Anzahl der Kreiseltragarmteile kann hierbei je nach gewünschtem Verstellbereich variieren. Wenn ein großer Verstellbereich gewünscht wird, können drei oder mehr Kreiseltragarmteile teleskopierbar ineinander schiebbar angeordnet sein. Eine einfache und stabile Tragarmanordnung bei für einen Großteil der Anwendungen ausreichendem Verstellbereich kann jedoch durch einen Kreiseltragarm mit zwei ineinander teleskopierbaren Kreiseltragarmteilen erreicht werden, wobei der eine Kreiseltragarmteil am Maschinenrahmen angelenkt ist und der zweite Kreiseltragarmteil in diesem ersten Kreiseltragarmteil einschiebbar ist bzw. auf diesen aufschiebbar ist.

Zum Ausheben des Rechkreisels können grundsätzlich verschieden ausgebildete Schwenkantriebe vorgesehen sein. Eine bevorzugte Ausführung der Erfindung besteht darin, dass ein Druckmittelzylinder einerseits an dem Kreiseltragarm, insbesondere dessen am Maschinenrahmen angelenkten Kreiseltragarmteil angelenkt ist. Mit seinem inneren Ende kann der Druckmittelzylinder am Maschinenrahmen bzw. einem damit verbundenen Anlenkstück gekoppelt sein. Ggf. wäre es auch möglich, bei auf gleicher Höhe nach rechts und links auskragenden Rechkreiseln einen Druckmittelzylinder mit den beiden gegenüber liegenden Kreiseltragarmen zu verbinden. Bevorzugt ist jedoch ein Druckmittelzylinder für jeden Kreiseltragarm, so dass die Kreiseltragarme unabhängig voneinander ausgehoben werden können, wodurch auch Stabilitätsprobleme in der ausgehobenen Stellung vermieden werden.

Die Erfindung wird nachfolgend anhand eines bevorzugten Ausführungsbeispiels und zugehöriger Zeichnungen näher erläutert. In den Zeichnungen zeigen:
- Fig. 1:: eine Draufsicht auf eine Heuwerbungsmaschine in Form eines Krei- selschwaders nach einer vorteilhaften Ausführung der Erfindung, die die beiden Rechkreisel in ihrer abgesenkten Arbeitsstellung zeigt,
- Fig. 2:: eine schematische Seitenansicht des Kreiselschwaders aus Fig. 1, wo- bei einer der beiden Rechkreisel in seiner ausgehobenen Transportstel- lung gezeigt ist,
- Fig. 3:: eine ausschnittsweise, perspektivische Darstellung des teleskopierbaren Kreiseltragarms und des diesem zugeordneten Längenverstellantrieb, und
- Fig. 4:: eine ausschnittsweise, schematische Rückansicht des Kreiselschwaders aus den vorhergehenden Figuren, die einen Rechtkreisel in der abge- senkten Arbeitsstellung und in gestrichelter Darstellung in der angeho- benen Transportstellung zeigt und dabei den Längenverstellantrieb zur Verstellung der Kreiseltragarmlänge.

In den Figuren ist als Heuwerbungsmaschine ein Kreiselschwader 1 mit zwei Rechkreiseln 2 gezeigt, die jeweils über Kreiseltragarme 3 mit einem Maschinenrahmen 4 verbunden sind, wobei in der gezeichneten Ausführungsform die beiden Rechkreisel 2 rechts und links auskragend vom Maschinenrahmen 4 auf selber Höhe in Fahrtrichtung betrachtet angeordnet sind. Der genannte Maschinenrahmen 4 ist mit einem Fahrwerk 5 am Boden abgestützt und über eine Anbauvorrichtung 6 an einem Schlepper 7 anbaubar.

Die Rechkreisel 2 umfassen um eine aufrechte Achse umlaufende Rechelemente 8, die auf ihrer Umlaufbahn in an sich bekannter Weise zyklisch verdreht werden, so dass die Rechkreisel 2 auf dem Boden liegendes Erntegut zu einem Schwad zusammenrechen.

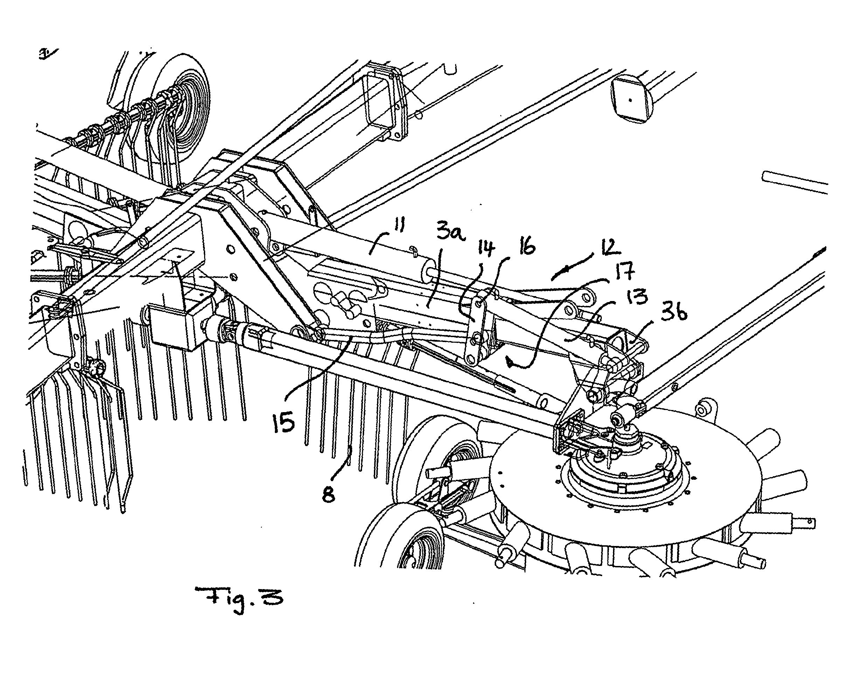

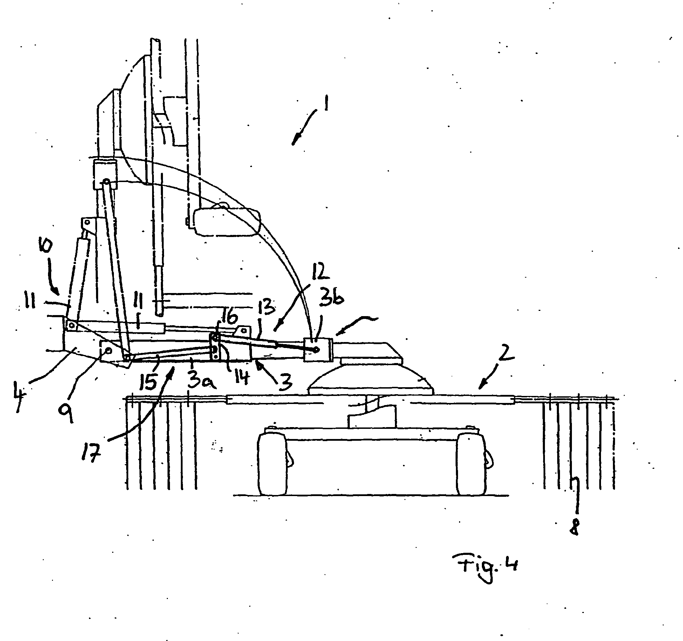

Die Kreiseltragarme 3, an denen die Rechkreisel 2 kardanisch aufgehängt sein können, sind vorteilhafterweise teleskopierbar ausgebildet. Sie umfassen jeweils ein inneres Kreiseltragarmteil 3a sowie ein äußeres Kreiseltragarmteil 3b, die ineinander schiebbar ausgebildet sind, vgl. Fig. 3 und Fig. 4.

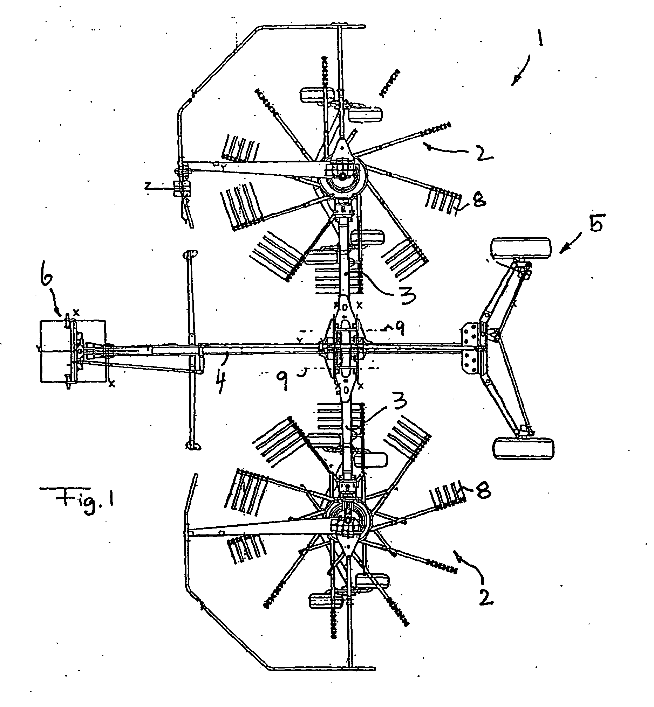

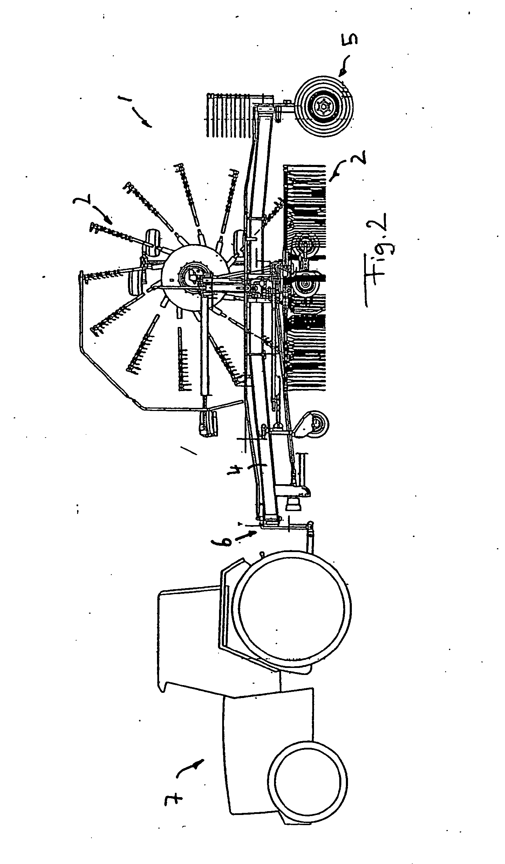

Die genannten Kreiseltragarme 3 sind dabei jeweils um eine liegende, in Fahrtrichtung weisende Kreiseltragarmschwenkachse 9 schwenkbar an dem Maschinenrahmen 4 angelenkt, so dass die Kreiseltragarme 3 zusammen mit den daran befestigten Rechkreiseln 2 aus der in Fig. 1 gezeigten, abgesenkten Arbeitsstellung in eine ausgehobene Transport- und/oder Vorgewendestellung nach oben geschwenkt werden können, wobei Fig. 2 und 4 eine etwa 90° nach oben geschwenkte Transportstellung zeigen. Als Schwenkantrieb 10 ist dabei in der gezeichneten Ausführungsform für jeden Rechkreisel 2 ein Aushubzylinder 11 vorgesehen, der einerseits am Maschinenrahmen 4 und andererseits an dem inneren Kreiseltragarmteil 3a angelenkt ist, vgl. Fig. 3. Insbesondere kann der Aushubzylinder 11 am äußeren Kragen des inneren Kreiseltragarmteils 3a angelenkt sein.

Um die teleskopierbaren Kreiseltragarme 3 ein- und ausfahren zu können, ist den Kreiseltragarmen 3 ein Längenverstellantrieb 12 zugeordnet, der unabhängig von dem Schwenkantrieb 10 und/oder unabhängig von der Aushub- bzw. Schwenkstellung der Kreiseltragarme 3 betätigbar ist. In der gezeichneten Ausführungsform umfasst der genannten Längenverstellantrieb 12 einen Druckmittelzylinder 13, der mit seinem äußeren Ende, das in der gezeichneten Ausführung von seiner Kolbenstange gebildet wird, an dem äußeren Kreiseltragarmteil 3b angelenkt ist. Mit seinem inneren Ende, das in der gezeichneten Ausführung vom Zylinderkorpus gebildet wird, ist der Druckmittelzylinder 13 an einem Umlenkhebel 14 angelenkt, der an dem inneren Kreiseltragarmteil 3a schwenkbar gelagert ist. Die Schwenkstellung des genannten Umlenkhebels 14 wird von einem Lenker 15 bestimmt, der mit seinem einen Ende an dem besagten Umlenkhebel 14 angelenkt ist und mit seinem anderen Ende am Maschinenrahmen 4 an einem Punkt angelenkt ist, der von der Kreiseltragarmschwenkachse 9 beabstandet ist. Hierdurch verstellt sich der Umlenkheben 14 in Abhängigkeit von der Schwenkstellung des Kreiseltragarms 3. Der Umlenkhebel 14 bildet zusammen mit dem Lenker 15 eine Verstelleinrichtung 17 zur Verstellung des Verstellbereiches des Druckmittelzylinders 13 bzw. eine Einrichtung zur Verschiebung des Anlenkpunktes 16 des besagten Druckmittelzylinders 13.

Über den Druckmittelzylinder 13 ist der jeweilige Kreiseltragarm 3 dabei jedoch unabhängig von seiner Schwenkstellung ein- und ausfahrbar. Insbesondere kann in der abgesenkten Arbeitsstellung der Abstand des jeweiligen Rechkreisel 2 vom Maschinenrahmen 4 und damit der Abstand der beiden Rechkreisel 2 voneinander variiert werden, wodurch die Schwadbreite in der gewünschten Weise eingestellt werden kann. In der abgesenkten Betriebsstellung steht der Umlenkhebel 14 durch den Lenker 15 fest, so dass sich der Druckmittelzylinder 13 sozusagen fest am inneren Kreiseltragarmteil 3a abstützt. Dementsprechend kann der Kreiseltragarm 3 ein- und ausgefahren werden.

Wird der Rechkreisel 2 zusammen mit dem Kreiseltragarm 3 nach oben geschwenkt, verstellt sich der Umlenkhebel 14, wodurch ein anderer Verstellbereich für den Längenverstellantrieb 12 bewirkt wird. Nichtsdestotrotz kann durch Ein- und Ausfahren des Druckmittelzylinders 13 auch in der ausgehobenen und/oder nach oben geschwenkten Stellung die Kreiseltragarmlänge 3 variiert werden.

## Patentansprüche

1. Heuwerbungsmaschine, insbesondere Kreiselschwader (1) mit zumindest einem Rechkreisel (2), der über einen Kreiseltragarm (3) an einem Maschinenrahmen (4) um eine liegende Schwenkachse (9) schwenkbar angelenkt und mittels eines Schwenkantriebs (10) aus einer abgesenkten Arbeitsstellung in eine nach oben geschwenkte Transport- und/oder Vorgewendestellung aushebbar ist, wobei der genannte Kreiseltragarm (3) längenveränderbar, insbesondere teleskopierbar, ausgebildet ist wobei ein unabhängig von der Schwenkstellung des Kreiseltragarms (3) und unabhängig vom Schwenkantrieb (10) betätigbarer Längenverstellantrieb (12) zur Längenverstellung des Kreiseltragarms (3) unabhängig von dessen Schwenkstellung vorgesehen ist, **dadurch gekennzeichnet, dass** der Längenverstellantrieb (12) an einem beweglich ausgebildeten und/oder verstellbaren Anlenkpunkt (16) angelenkt ist, wobei dem Anlenkpunkt (16) ein Verstellmechanismus (17) zur Verstellung des Anlenkpunkts (16) in Abhängigkeit der Schwenkstellung des Kreiseltragarms (3) zugeordnet ist.

2. Heuwerbungsmaschine nach dem vorhergehenden Anspruch, wobei der Längenverstellantrieb (12) einen Druckmittelzylinder (13) umfasst, der einerseites an einem Kreiseltragarmteil (3b) oder einem damit verbundenen Anlenkstück und andererseits mit einem anderen Kreiseltragarmteil (3a), einem Maschinenrahmenteil oder einem damit verbundenen Anlenkstück angelenkt ist.

3. Heuwerbungsmaschine nach einem der vorhergehenden Ansprüche, wobei der Längenverstellantrieb (12) vorzugsweise über eine Lenkeranordnung mit einem von der Schwenkachse (9) des Kreiseltragarms (3) beabstandeten Punkt am Maschinenrahmen (4) verbunden ist.

4. Heuwerbungsmaschine nach dem vorhergehenden Anspruch, wobei der Druckmittelzylinder (13) an einem Umlenkhebel (14) angelenkt ist, der schwenkbar an einem Kreiseltragarmteil (3a) gelagert und über einen Lenker (15) mit dem von der Kreiseltragarmschwenkachse (9) beabstandeten Punkt am Maschinenrahmen (4) verbunden ist.

5. Heuwerbungsmaschine nach dem vorhergehenden Anspruch, wobei der Umlenkhebel (14) und/oder die Anlenkung des Lenkers (15) derart ausgebildet sind, dass die sich beim Nach-oben- oder Nach-unten-verschwenken des Kreiseltragarms (3) einstellende Verstellung des Anlenkpunktes (16) des Druckmittelzylinders (13) am Umlenkhebel (14) kleiner ist als der maximale Verstellweg des Druckmittelzylinders (13).

6. Heuwerbungsmaschine nach einem der vorhergehenden Ansprüche, wobei der Schwenkantrieb (10) einen Druckmittelzylinder (11) aufweist, der an dem am Maschinenrahmen (4) angelenkten Kreiseltragarmteil (3a) und/oder einem damit verbundenen Anlenkstück angelenkt ist.

## Claims

1. A hay-making machine, in particular a rotary swather (1) having at least one rotary rake (2) which is pivotally connected, pivotably about a horizontal pivot axis (9), via a rotary carrier arm (3) to a machine frame (4), and can be raised by means of a pivot drive (10) from a lowered working position into an upwardly pivoted transport position and/or headland position, wherein the named rotary carrier arm (3) is configured as changeable in length, in particular as telescopic, wherein a length adjustment drive (12) is provided which can be actuated independently of the pivot position of the rotary carrier arm (3) and independently of the pivot drive (10) for the length adjustment of the rotary carrier arm (3) independently of its pivot position, **characterised in that** the length adjustment drive (12) is pivotally connected to a movably configured and/or adjustable pivotal connection point (16), with an adjustment mechanism (17) for adjusting the pivotal connection point (16) in dependence on the pivot position of the rotary carrier arm (3) being associated with the pivotal connection point (16).

2. A hay-making machine in accordance with the preceding claim, wherein the length adjustment drive (12) includes a pressure medium cylinder (13) which is pivotally connected, on the one hand, to a rotary carrier arm part (3b) or to a pivotal connection piece connected thereto and on the other hand, to another rotary carrier arm part (3a), to a machine frame part or to a pivotal connection piece connected thereto.

3. A hay-making machine in accordance with one of the preceding claims, wherein the length adjustment drive (12) is preferably connected via a guide arrangement to a point at the machine frame (4) spaced apart from the pivot axis (9) of the rotary carrier arm (3).

4. A hay-making machine in accordance with the preceding claim, wherein the pressure medium cylinder (13) is pivotally connected to a bell crank (14) which is pivotably supported at a rotary carrier arm part (3a) and is connected via a guide (15) to the point at the machine frame (4) spaced apart from the pivot axis (9) of the rotary carrier arm.

5. A hay-making machine in accordance with the preceding claim, wherein the bell crank (14) and/or the pivotal connection of the guide (15) is/are configured such that the adjustment of the pivotal connection point (16) of the pressure medium cylinder (13) at the bell crank (14) which is adopted on the upward or downward pivoting of the rotary carrier arm (3) is smaller than the maximum adjustment path of the pressure medium cylinder (13).

6. A hay-making machine in accordance with one of the preceding claims, wherein the pivot drive (10) has a pressure medium cylinder (11) which is pivotally connected to the rotary carrier arm part (3a) pivotally connected to the machine frame (4) and/or is pivotally connected to a pivotal connection piece connected thereto.

## Revendications

1. Râteau à foin, en particulier râteau andaineur (1) avec au moins un giroscope de râtissage (2) qui est articulé d'une manière pivotante par un bras de support rotatif (3) à un châssis de machine (4) autour d'un axe de pivotement allongé (9) et peut être relevé au moyen d'une commande de pivotement (10) d'une position de travail abaissée en une position de transport et/ou de fourrière, où le bras de support rotatif 3) est réalisé d'une manière modifiable en longueur, en particulier d'une manière télescopique, où est prévue une commande d'ajustement en longueur (12) actionnable indépendamment de la position de pivotement du bras de support rotatif (3) et indépendamment de la commande de pivotement (10) pour l'ajustement en longueur du bras de support rotatif (3) indépendamment de sa position de pivotement, **caractérisé en ce que** la commande d'ajustement en longueur (12) est articulée à un point d'articulation mobile et/ou ajustable (16), où est associé au point d'articulation (16) un mécanisme d'ajustement (17) pour ajuster le point d'articulation (16) en fonction de la position de pivotement du bras de support rotatif (3).

2. Râteau à foin selon la revendication précédente, où la commande d'ajustement en longueur (12) comprend un vérin à fluide sous pression (13) qui est articulé, d'une part, à une partie de bras de support rotatif (3b) ou une pièce d'articulation reliée à celle-ci et, d'autre part, à une autre partie de bras de support rotatif (3a), une partie de châssis de machine ou une pièce d'articulation reliée à celle-ci.

3. Râteau à foin selon l'une des revendications précédentes, où la commande d'ajustement en longueur (12) est reliée de préférence par un agencement à bielle à un point au châssis de machine (4) espacé de l'axe de pivotement (9) du bras de support rotatif (3).

4. Râteau à foin selon la revendication précédente, où le vérin à fluide sous pression (13) est articulé à un levier de renvoi (14) qui est logé d'une manière pivotante à une partie de bras de support rotatif (3a) et est relié par une bielle (15) au point au châssis de machine (4) espacé de l'axe de pivotement (9) du bras de support rotatif.

5. Râteau à foin selon la revendication précédente, où le levier de renvoi (14) et/ou l'articulation de la bielle (15) sont réalisés de telle sorte que l'ajustement du point d'articulation (16) se produisant lors du pivotement vers le haut ou vers le bas du bras de support rotatif (3), du vérin à fluide de pression (13) au levier de renvoi (14) est plus petit que le trajet d'ajustement maximal du vérin à fluide sous pression (13).

6. Râteau à foin selon l'une des revendications précédentes, où la commande de pivotement (10) comprend un vérin à milieu sous pression (11) qui est articulé à une partie de bras de support rotatif (3a) articulée au châssis de machine (4) et/ou à une pièce d'articulation reliée à celui-ci.
